# EUROPEAN PATENT APPLICATION

(11) **EP 4 309 779 A1**
(43) Date of publication of application: **24.01.2024**
(21) Application number: 23185821.8
(22) Date of filing: 17.07.2023
(51) Int. Cl.: B01J 8/04, B01J 8/06

(54) **COMBINED REFORMER**

(30) Priority: 18.07.2022 KR 20220088495; 20.06.2023 KR 20230079217
(71) Applicant: Doosan Enerbility Co., Ltd., Seongsan-gu Changwon-si, Gyeongsangnam-do 51711 (KR)
(72) Inventor: Nam, Gyeong Mo, Gyeonggi-do (KR); Kim, Bong Keun, Gyeonggi-do (KR)
(74) Representative: Ter Meer Steinmeister & Partner

(57) **Abstract**

The present disclosure provides a combined reformer capable of continuously performing different reforming reactions by sequentially supplying heat from the combustion gas to the two or more catalyst tubes that react at different temperatures. Also, the present disclosure provides a combined reformer capable of enhancing the reforming efficiency with a U-shaped first catalyst tube including a preheating section where the hydrocarbon gas is preheated, flowing parallel to the combustion gas, and a reforming section where the catalytic reforming takes place.

## Description

The present application claims priority to Korean Patent Applications No. 10-2022-0088495, filed July 18, 2022, and No. 10-2023-0079217, filed June 20, 2023.

### BACKGROUND OF THE INVENTION

### Field of the Invention

The present disclosure relates to a combined reformer, and more particularly, to a combined reformer capable of continuously performing different reforming reactions by supplying heat from the combustion gas to two or more catalyst tubes, which react at different temperatures, in sequence.

### Description of the Related Art

The conventional Steam Methane Reforming (SMR) facility, used for reforming natural gas with methane (CH4) as the main component, has the complexity issue in terms of structure and process. This is mainly because an extra pre-reformer is necessary to convert gases containing higher carbon content hydrocarbons (CxHy) into methane before the reforming process can take place.

In addition, even when biogas needs to be reformed, since carbon dioxide contained in biogas must be removed and then supplied to the steam methane reforming facility, there is a problem that a separate facility for removing carbon dioxide is required.

### SUMMARY OF THE INVENTION

The present disclosure aims to provide a combined reformer capable of continuously performing different reforming reactions by sequentially supplying heat from the combustion gas to the two or more catalyst tubes that react at different temperatures.

Also, the present disclosure aims to provide a combined reformer capable of enhancing the reforming efficiency with a U-shaped first catalyst tube including a preheating section where the hydrocarbon gas is preheated, flowing parallel to the combustion gas, and a catalyst reforming section where the catalytic reforming takes place.

The technical objects of the present disclosure are not limited to the aforesaid, and other objects not described herein which can be clearly understood by those skilled in the art from the descriptions below.

In order to accomplish the above objects, a combined reformer according to an embodiment of the present disclosure includes a main body, a plurality of first catalyst tubes arranged inside the main body and configured to act at a first temperature, a plurality of second catalyst tubes arranged inside the main body, fluidly connected to the plurality of first catalyst tubes, and configured to react at a second temperature higher than the first temperature, a combustion section configured to supply heat to the plurality of first catalyst tubes and the plurality of second catalyst tubes, and a first distributor connecting the plurality of first catalyst tubes and the plurality of second catalyst tubes and configured to distribute gas and steam discharged from the plurality of first catalyst tubes to the plurality of second catalyst tubes. According to an embodiment, the plurality of first catalyst tubes are formed in a U-shape and each U-shaped first catalyst tube is provided with a preheating section where pre-reforming hydrocarbon gas flows parallel to combustion gas and is heated and a catalyst reforming section where the catalytic reforming takes place.

According to an embodiment, the preheating section may be located in one of the straight sections of the U-shaped tube, and the catalyst reforming section may be located in the other straight section of the U-shaped tube.

According to an embodiment, the plurality of first catalyst tubes are configured such that the hydrocarbon gas may flow in the same direction with a flow direction of the combustion gas in the preheating section and the hydrocarbon gas flows in the opposite direction to the flow direction of the combustion gas in the catalyst reforming section.

According to an embodiment, the first distributor may include a first chamber connecting discharge ends of the plurality of first catalyst tubes and inlet ends of the plurality of second catalyst tubes. According to an embodiment, the first distributor is in a torus shape.

According to an embodiment, the combined reformer may further include a synthesis gas discharge section arranged on the inner side in the radial direction of the first distributer, accommodating the connection of discharge ends of the plurality of second catalyst tubes to discharge synthesis gas.

According to an embodiment, the combined reformer may further include a second distributor distributing the hydrocarbon gas and steam supplied to the plurality of first catalyst tube, wherein the second distributor may be arranged on the same side as the first distributor with respect to the main body.

According to an embodiment, the second distributor may include one or more supply ports supplying the hydrocarbon gas and steam and a second chamber connected to inlet ends of the plurality of first catalyst tubes.

According to an embodiment, the synthesis gas discharge section may extend through the inner side in the radial direction of the second distributor.

According to an embodiment, the combustion section may be arranged on the opposite side of the first distributor and the second distributor with respect to the main body.

According to an embodiment, each U-shaped first catalyst tube may extend along the longitudinal and circumferential directions of the main body.

According to an embodiment, the combined reformer may further include a spiral guide plate passing through the plurality of first catalyst tubes to guide the combustion gas.

According to an embodiment, wherein the plurality of first catalyst tubes may be inserted through the guide plate.

According to an embodiment, the guide plate may be composed of a plurality of sub-plates, divided at each section passing through each U-shaped first catalyst tube.

According to an embodiment, the plurality of first catalyst tubes may include fins provided on the outer surface thereof in the longitudinal direction.

According to an embodiment, the hydrocarbon gas suppled to the plurality of first catalyst tubes may include hydrocarbons with a carbon number of 2 or more, which may be reformed into methane by reacting with the steam in the plurality of first catalyst tubes, the methane being reformed into synthesis gas including hydrogen and carbon monoxide by reacting with the steam in the plurality of second catalyst tubes.

According to an embodiment, the hydrocarbon gas suppled to the plurality of first catalyst tubes may include methane and carbon dioxide, the methane being reformed into synthesis gas including hydrogen and carbon monoxide by reacting with the steam in the plurality of first catalyst tubes and by reacting with the carbon dioxide in the plurality of second catalyst tubes.

In order to accomplish the above objects, a combined reformer according to another embodiment of the present disclosure may include a main body, a plurality of first catalyst tubes arranged inside the main body and configured to react at a first temperature, a plurality of second catalyst tubes arranged inside the main body, connected to the plurality of first catalyst tubes, and configured to react at a second temperature higher than the first temperature, a combustion section configured to supply heat to the plurality of first catalyst tubes and the plurality of second catalyst tubes, a second distributor distributing hydrocarbon gas and steam supplied to the plurality of first catalyst tubes. According to an embodiment the plurality of first catalyst tubes are formed in a U-shape and each U-shaped first catalyst tube is provided with a preheating section where pre-reforming hydrocarbon gas flows parallel to combustion gas and is heated and a catalyst reforming section where the catalytic reforming takes place.

### BRIEF DESCRIPTION OF THE DRAWINGS

FIG. 1 is a front view illustrating a combined reformer of the first embodiment of the present disclosure;
FIG. 2 is a perspective view of the combined reformer of FIG. 1, with the omission of the main body;
FIG. 3 is a cross-sectional view taken along the A-A' line in FIG. 2;
FIG. 4 is a cross-sectional view taken along the B-B' line in FIG. 3;
FIG. 5 is a graph representing temperature changes of combustion gas and hydrocarbon gas as the hydrocarbon gas passes through a preheating section and a catalyst reforming section of a first catalyst tube;
FIG. 6 is a perspective view illustrating a combined reformer according to a second embodiment of the present disclosure, with the omission of the main body;
FIG. 7 is a perspective view of an alternative embodiment of FIG. 6;
FIG. 8 is a perspective view illustrating a combined reformer according to the third embodiment of the present disclosure, with the omission of the main body; and
FIG. 9 is a perspective view of an alternative embodiment of FIG. 8.

### DETAILED DESCRIPTION OF THE INVENTION

Hereinafter, preferred embodiments of the combined reformer of the present disclosure will be described with reference to the accompanying drawings.

The following terms are defined in consideration of the functionality in the present disclosure and may vary according to the intention or convention of a user or an operator, and thus, the following embodiments are merely illustrative examples of the components recited in the claims of the present disclosure, and do not limit the scope of the invention.

To provide a clear explanation of the present disclosure, irrelevant parts have been omitted, and throughout the specification, the same or similar components are denoted by the same reference numerals. Throughout the specification, when a part is said to "comprise" a certain component, this does not mean that other components are excluded, but that other components may be additionally included, unless there is a specific indication to the contrary.

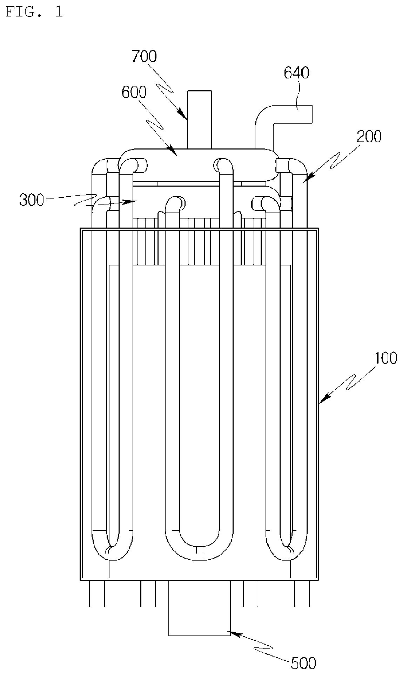

First, a description is made of the combined reformer according to the first embodiment of the present disclosure with reference to FIGS. 1 to 5.

The combined reformer according to the first embodiment of the present disclosure includes a main body 100, a first catalyst tube 200, a first distributor 300, a second catalyst tube 400, a combustion section 500, a second distributor 600, and a synthesis gas discharge section 700.

According to an embodiment, the main body 100 may be formed in a cylindrical shape, defining the overall appearance of the combined reformer and providing an internal cylindrical space, but is not limited thereto.

The main body 100 is equipped inside thereof with two or more catalyst tubes that react at different temperatures. In detail, the main body 100 is equipped with a plurality of first catalyst tubes 200 reacting at a first temperature (T1) and a plurality of second catalyst tubes 400 that react at a second temperature (T2) higher than the first temperature (T1). The first temperature (T1) and the second temperature (T2) may be set differently depending on the reactions occurring in the first catalyst tubes 200 and the second catalyst tubes 400.

In this embodiment, the description is focused on the situation where the first catalyst tubes 200 are supplied with a hydrocarbon gas containing hydrocarbons with carbon numbers of 2 or more along with steam. In these first catalyst tubes 200, the hydrocarbons with carbon numbers of 2 or more undergo reforming with steam resulting in their conversion into methane. This methane then proceeds to undergo reforming with steam in the second catalyst tubes 400 leading to its conversion into synthesis gas, which includes hydrogen and carbon monoxide.

The first temperature (T1), which is the reaction temperature of the first catalyst tubes 200, may range from approximately 350°C to 550°C. A catalyst that possesses the capability to reform hydrocarbons with carbon numbers of 2 or more is utilized in the first catalyst tubes 200. For example, a nickel-based catalyst using MgO or Al₂O₃ or a combination thereof as a support material may be applied to the first catalyst tubes 200. As a result, in the first catalyst tubes 200, high-grade hydrocarbons with carbon numbers of 2 or more, such as ethane, propane, and butane may be converted into methane, carbon monoxide, and hydrogen through reaction formulas (1) and (2).

Reaction formula (1) ------- CnHm + nH₂O → nCO + (n+m/2)H₂

Reaction formula (2) ------- CO + 3H₂ → CH₄ + H₂O

The second catalyst tubes 400 operates at a reaction temperature ranging from approximately 700°C to 900°C, the second temperature (T2). A catalyst capable of reforming methane is applied in the second catalyst tubes 400. For example, a nickel-based catalyst may also be applied to the second catalyst tube 400. As a result, in the second catalyst tube 400, methane may be converted into synthesis gas (syngas) containing hydrogen and carbon monoxide through reaction formula (3).

**€**

Reaction formula (3) ------- CH₄ + H₂O → CO + 3H₂

While the wet reforming reaction of methane is primarily described as taking place in the second catalyst tube 400, it is indeed possible for some of the reaction to occur in the first catalyst tube 200. This is because the wet reforming of methane can occur across a wide temperature range including the temperature range of the first catalyst tube. Therefore, some degree of methane wet reforming might occur in both catalyst tubes, although the majority of the reaction is expected to happen in the second catalyst tubes 400.

The plurality of first catalyst tubes 200 and the plurality of second catalyst tubes 400 are connected through the first distributor 300, allowing the hydrocarbon gas and steam supplied to the plurality of first catalyst tubes 200 to be distributed and sequentially flow through the plurality of second catalyst tubes 400 via the first distributor 300. Here, the gas and steam discharged from the plurality of first catalyst tubes 200 through the first distributor 300 may be uniformly supplied to the plurality of second catalyst tubes 400, and the detailed configuration thereof will be made in detail later.

Accordingly, even though the hydrocarbon gas supplied to the first catalyst tubes 200 contains a large amount of hydrocarbons with carbon numbers of 2 or more, it may be reformed into synthesis gas through steam reforming reactions while flowing through the first catalyst tubes 200 and the second catalyst tubes 400 in sequence. That is, the high-grade hydrocarbons with carbon numbers of 2 or more may be converted into methane in the first catalyst tubes 200, and the methane converted in the first catalyst tubes 200 may be introduced into the second catalyst tubes 400 and further converted into synthesis gas containing hydrogen and carbon monoxide. Particularly, according to an embodiment, the hydrocarbon gas supplied to the first catalyst tubes 200 may be a pyrolysis gas generated by the pyrolysis of waste materials. For example, it may be a pyrolysis gas generated by the pyrolysis of waste plastics, which contains a large amount of hydrocarbons of carbon numbers of 2 or more.

At the lower center of the main body 100, a combustion section 500 is installed to supply heat to the plurality of first catalyst tubes 200 and the plurality of second catalyst tubes 400 as shown in the drawing. According to embodiment, the combustion section 500 combusts the hydrocarbon gas, generating combustion gases. The generated combustion gases are provided through the central part of the main body 100.

Because the second catalyst tubes 400 react at a higher temperature than the first catalyst tubes 200, it may be effective that the combined reformer according to the present disclosure is designed such that for the combustion gases discharged from the combustion section 500 to supply heat to the plurality of second catalyst tubes 400 before supplying heat to the plurality of first catalyst tubes 200. To achieve this, the plurality of second catalyst tubes 400 are positioned on the inner side of the radius direction of the main body 100 compared to the plurality of first catalyst tubes 200. In other words, the plurality of second catalyst tubes 400 may be disposed radially more inwardly than the plurality of first catalyst tubes 200 in the main body 100.

However, the configuration is not limited thereto, and it is also possible, according to an embodiment, for the combustion gases to supply heat to the plurality of second catalyst tubes 400 after supplying heat to the plurality of first catalyst tubes 200, by positioning the plurality of first catalyst tubes 200 on the inner side of the radius direction of the main body 100 compared to the plurality of second catalyst tubes 400.

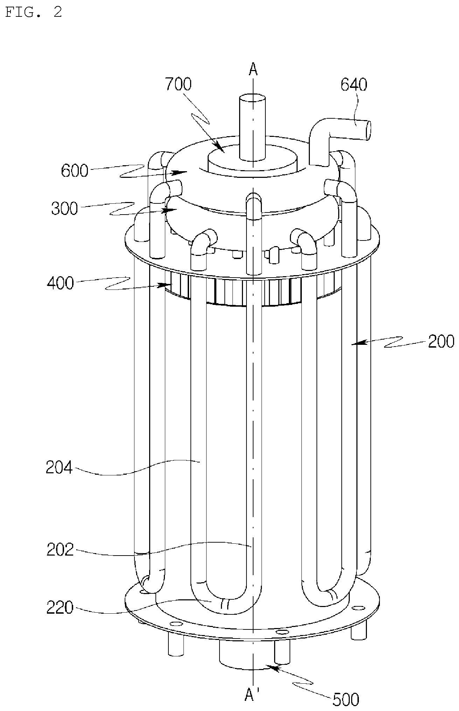

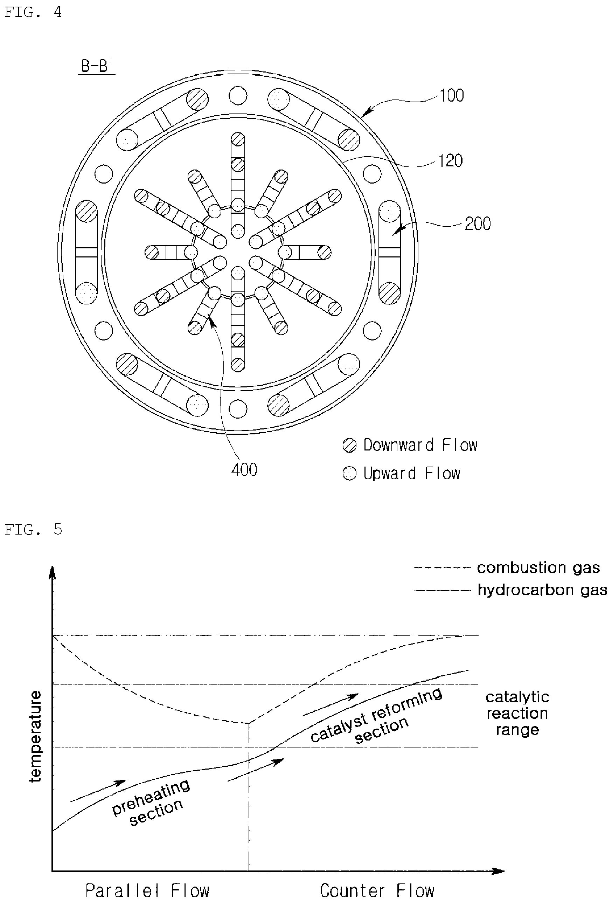

In detail, as shown in FIGS. 2 and 4, the plurality of first catalyst tubes 200 may be arranged at intervals along the circumferential direction of the main body 100 in the main body 100. In other words, each of the plurality of first catalyst tubes 200 may be disposed spaced apart in the circumferential direction from each other with a same distance. Likewise, the plurality of second catalyst tubes 400 may be also arranged at intervals along the circumferential direction of the main body 100, on the inner side of the radius direction of the plurality of first catalyst tubes 200 (i.e., arranged radially more inwardly than the first catalyst tubes 200). Each of the plurality of second catalyst tubes 400 also may be disposed spaced apart in the circumferential direction from each other with a same distance. The number of the plurality of first catalyst tubes 200 and the plurality of second catalyst tubes 400 may be adjusted depending on factors such as the size of the reformer. Both the plurality of first catalyst tubes 200 and the plurality of second catalyst tubes 400 may extend vertically along the longitudinal direction of the main body 100.

Here, each of the plurality of first catalyst tubes 200 may be formed in a U-shape. In detail, each of the plurality of first catalyst tubes 200 may extend vertically from the upper side of the combined reformer (may be referred to as a first section of the first catalyst tubes 200), then is connected to a U-turn section 220 (may be referred to as a second section of the first catalyst tubes 200), and extend vertically again toward the upper side (may be referred to as a third section of the first catalyst tubes 200). As shown in FIGS. 2 and 4, each U-shaped first catalyst tube 200 may be extended along the longitudinal and circumferential direction of the main body 100. In other words, the first section and the third section of the first catalyst tubes 200 may be extended in the longitudinal direction and the second section of the first catalyst tubes 200 may be extended generally in the circumferential direction.

Each U-shaped first catalyst tube 200 is provided with a preheating section 202 where the pre-reforming hydrocarbon gas flows parallel to combustion gas and is heated, and a catalyst reforming section 204 where the catalytic reforming occurs. As shown in FIG. 2, the preheating section 202 may be located in one of the straight sections of the U-shaped tube, while the catalyst reforming section 204 may be located in the other straight section of the U-shaped tube. That is, the catalytic material may be filled only in the straight section corresponding to the catalyst reforming section 204 of the U-shaped first catalyst tube 200. The preheating section 202 and the catalyst reforming section 204 correspond to the first section and third section of the first catalyst tubes 200, respectively.

Inside the main body 100, there is a first wall 120 that guides the flow of the combustion gases discharged from the combustion section 500 to effectively supply heat to the plurality of first catalyst tubes 200 and the plurality of second catalyst tubes 400. The first wall 120 is positioned between the plurality of first catalyst tubes 200 and the plurality of second catalyst tubes 400, extending vertically upwards from the lower part of the main body 100. As a result, the combustion gases discharged from the combustion section 500 may flow upwards in the inside of the first wall 120, supplying heat to the plurality of second catalyst tubes 400, and the slightly cooled combustion gases may flow downwards outside of the first wall 120 and inside the main body 100, supplying heat to the plurality of first catalyst tubes 200. In other words, the combustion gases discharged from the combustion section 500 may flow upwards from the bottom the body of the main body 100, return its flow direction around the upward end of the first wall 120 and then flow downwards toward the bottom of the main body. After supplying heat to the plurality of first catalyst tubes 200 and the plurality of second catalyst tubes 400, the combustion gases are discharged to the outside of the main body 100.

As a result, the hydrocarbon gas passing through the preheating section 202 of the U-shaped first catalyst tube 200 flows in the same direction between the first wall 120 and the main body 100 as the combustion gas does, while the hydrocarbon gas passing through the catalyst reforming section 204 flows in the opposite direction to the combustion gas between the first wall 120 and the main body 100. FIG. 5 shows the temperature changes of combustion gas and hydrocarbon gas as hydrocarbon gas passes through the preheating section 202 and the catalyst reforming section 204. Preheating the hydrocarbon gases in the preheating section 202 to a temperature close to the catalytic reaction temperature range allows for immediate catalytic reforming reaction in the catalyst reforming section 204, maximizing heat absorption from the combustion gases and increasing the reforming efficiency. As shown in FIG. 5, the combined reformer may be configured such that the temperature of the combustion gas flowing between the first wall 120 and the main body 100 becomes lower toward and is lowest at the bottom of the first catalyst tubes 200. Furthermore, the lowest temperature of the combustion gas at the bottom of the first catalyst tubes 200 may be within the temperature range (T1) for the catalytic reaction of the first catalyst tubes 200.

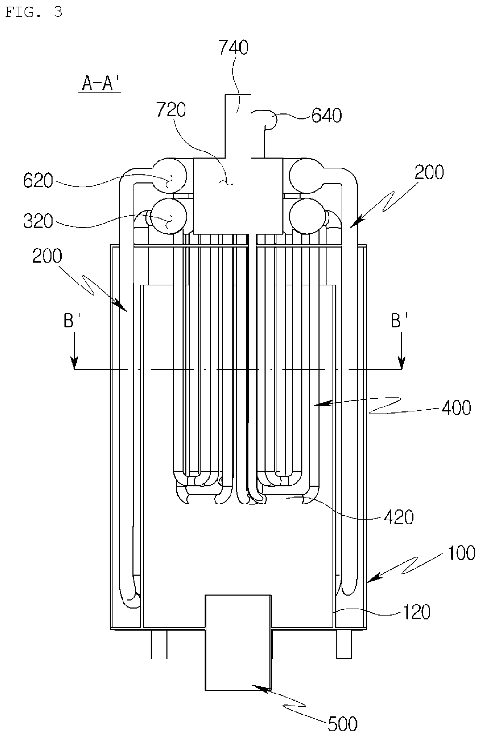

Similarly, the plurality of second catalyst tubes 400 are also formed in a U-shape. In detail, each of the plurality of second catalyst tubes 400 may extend vertically from the upper side of the main body 100 (may be referred to as a first section of the second catalyst tubes 400), then pass through a U-turn section 420 (may be referred to as a second section of the second catalyst tubes 400), and extend vertically again toward the upper side (may be referred to as a third section of the second catalyst tubes 400). As shown in FIG. 3, each U-shaped second catalyst tube 400 may be extended along the longitudinal and circumferential direction of the main body 100. In other words, the first section and the third section of the second catalyst tubes 400 may be extended in the longitudinal direction. According to an embodiment, the second section of the second catalyst tubes 400 may be extended in a radial direction of the main body 100. The number of U-turn sections 420 may be adjusted based on the required reaction time of the catalyst. As the required reaction time of the catalyst increases, the number of U-turn sections 420 may be increased.

As shown in FIGS. 2 and 3, the first distributor 300 is connected to the discharge end of the plurality of first catalyst tubes 200 and the inlet end of the plurality of second catalyst tubes 400. In detail, the first distributor 300 may be formed in a donut shape or in a torus shape, with a first chamber 320 inside that fluidly communicates with and connects the discharge end of the plurality of first catalyst tubes 200 and the inlet end of the plurality of second catalyst tubes 400. This allows gases and steam discharged from the plurality of first catalyst tubes 200 to gather in the first chamber 320 and be uniformly supplied to the plurality of second catalyst tubes 400.

Additionally, on the inner side of the radial direction of the first distributor 300, a synthesis gas discharge section 700 may be arranged. The synthesis gas discharge section 700 is connected to the discharge end of the plurality of second catalyst tubes 400 and serves for the discharge of synthesis gas. Since the second catalyst tubes 400 have a U-turn section 420 (i.e., the second section of the second catalyst tubes 400) extending in the radial direction of the main body 100, it is preferable for the synthesis gas discharge section 700 to be formed on the inner side of the radial direction of the first distributor 300, allowing for a more compact structural configuration of the combined reformer. In detail, the synthesis gas discharge section 700 may include a third chamber 720 that collects the synthesis gas by connecting to the discharge ends of the plurality of second catalyst tubes 400, and a discharge pipe 740 within the third chamber 720 that releases the collected synthesis gas to the outside.

Furthermore, the combined reformer also includes a second distributor 600, which serves for distributing the hydrocarbon gas and steam supplied to the plurality of first catalyst tubes 200. In the present disclosure, since the first catalyst tubes 200 are formed in a U-shape, as shown in FIG. 2, the second distributor 600 may be positioned on the same side as the first distributor 300 with respect to the main body 100, in terms of its radial position. Additionally, the combustion section 500 is located on the opposite side of the first distributor 300 and the second distributor 600 with respective to the main body 100 in the longitudinal direction. In other words, the first distributor 300 and the second distributor 600 may be disposed at the top of the main body 100 and the combustion section 500 may be disposed at the bottom of the main body. According to an embodiment, the second distributor 600 may be disposed directly above the first distributor 300 having a similar or a same shape with the first distributor 300, with a second chamber 620 inside thereof.

As shown in FIGS. 2 and 3, the second distributor 600 includes one or more supply ports 640 for supplying (i.e., receiving) hydrocarbon gas and steam, and a second chamber 620 connected to the inlet ends of the plurality of first catalyst tubes 200. Accordingly, the hydrocarbon gas and steam supplied from one or more supply ports 640 are gathered in the second chamber 620 and evenly supplied to a plurality of first catalyst tubes 200. To achieve a compact structure of the combined reformer, the synthesis gas discharge section 700 may extend through the inner side of the radial direction of the second distributor 600. In this embodiment, the third chamber 720 of the synthesis gas discharge section 700 extends through the inner side of the second distributor 600 and the inner side of the first distributor 300, resulting in a structure where the third chamber 720 is formed at the center and surrounded by the first chamber 320 and the second chamber 620. The synthesis gas discharge section 700 may be in a cylindrical shape.

Although the combined reformer has been described as including both the first distributor 300 and the second distributor 600 in this embodiment, it is also possible to include only the first distributor 300 or only the second distributor 600 according to an embodiment.

According to an embodiment, the first catalyst tubes 200 may be supplied with hydrocarbon gas (e.g., biogas) and steam, the hydrocarbon gas containing methane and carbon dioxide. Hereinafter, descriptions are made of the reforming reactions occurring in the first catalyst tubes 200 and the second catalyst tubes 400 when the biogas and steam are supplied to the first catalyst tubes 200. The structure of the combined reformer, excluding the reforming reactions, may be the same as described above.

When biogas and steam are supplied to the first catalyst tubes 200, methane reacts with steam according to reaction formula (3) to reform into synthesis gas containing hydrogen and carbon monoxide (wet reforming), while methane may be reformed into synthesis gas containing hydrogen and carbon monoxide by reacting with carbon dioxide according to reaction formula (4) in the second catalyst tubes 400 (dry reforming).

Reaction formula (3) ------- CH₄ + H₂O → CO + 3H₂

Reaction formula (4) ------- CH₄ + CO₂ → 2 CO + 2H₂

In this case, the first catalyst tube 200 may have a reaction temperature, denoted as the first temperature (T1), ranging from about 450°C to 650°C, and a catalyst suitable for wet reforming of methane may be applied. The second catalyst tube 400 may have a reaction temperature, denoted as the second temperature (T2), ranging from about 650°C to 850°C, and a catalyst suitable for dry reforming of methane may be applied.

Although the wet reforming reaction of methane is described as occurring in the first catalyst tubes 200, it is possible that some of the reforming reaction may also occur in the second catalyst tubes 400, as the wet reforming of methane can occur over a wide temperature range.

In this manner, the hydrocarbon gas (in this case, biogas containing methane and carbon dioxide) and steam may flow sequentially through the first catalyst tubes 200 and the second catalyst tubes 400, undergoing both wet reforming and dry reforming reactions to be converted into synthesis gas. In this case, a separate carbon dioxide removal device is not required because carbon dioxide does not need to be removed from biogas before the biogas is supplied to the reformer. In other words, carbon dioxide can be supplied to the reformer as a part of the biogas.

Similarly, in the U-shaped first catalyst tube 200, the hydrocarbon gas (biogas) passing through the preheating section 202 may flow in the same direction as the combustion gas, and the hydrocarbon gas (biogas) passing through the catalyst reforming section 204 may flow in the opposite direction to the combustion gas. The combined reformer may be configured such that the hydrocarbon gas (biogas) is preheated to a temperature close to the temperature range required for the catalytic reaction when reaching the catalyst reforming section 204, and thus, the catalytic reforming reaction may immediately occur when the hydrocarbon gas (biogas) reaches the catalyst reforming section 204, maximizing the heat absorption from the combustion gas and enhancing the reforming efficiency.

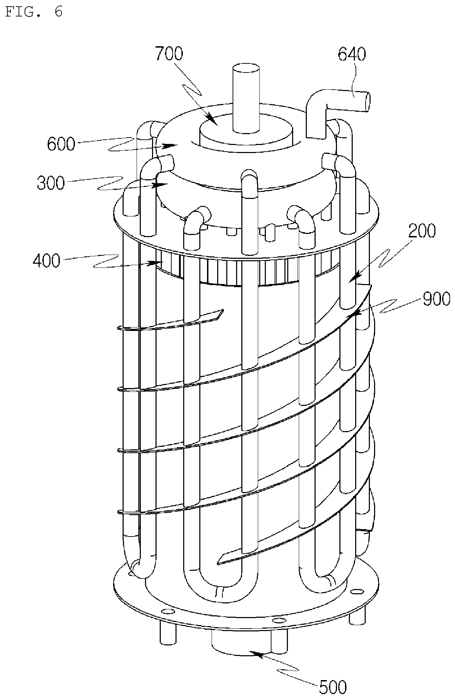

Next, a description is made of the combined reformer according to the second embodiment of the present disclosure with reference to FIG. 6.

The combined reformer in the second embodiment includes the same components as the combined reformer in the first embodiment and may additionally incorporate a spiral guide plate 900 that passes through the plurality of first catalyst tubes 200 to guide the combustion gas.

The guide plate 900 may be formed as a spiral plate surrounding the first wall 120 to guide the combustion gas flowing downward between the first wall 120 and the main body 100 and may accommodate the insertion of the plurality of first catalyst tubes 200. For this purpose, the guide plate 900 may have penetration holes provided to accommodate the plurality of first catalyst tubes 200, and the first catalyst tubes 200 may be securely fixed to the penetration holes by welding after being inserted into the penetration holes.

As a result, as the combustion gas flows downward along the spiral guide plate 900, traversing through all the first catalyst tubes 200, which reduces the heat absorption variation among the plurality of first catalyst tubes and increases the heat absorption capacity of the first catalyst tubes by adjusting the combustion gas velocity through the first catalyst tubes 200 and enhancing the external heat transfer coefficient.

However, in this embodiment, the coupling of the plurality of first catalyst tubes 200 to a single guide plate 900 may make it challenging to access and repair the first catalyst tubes, when necessary.

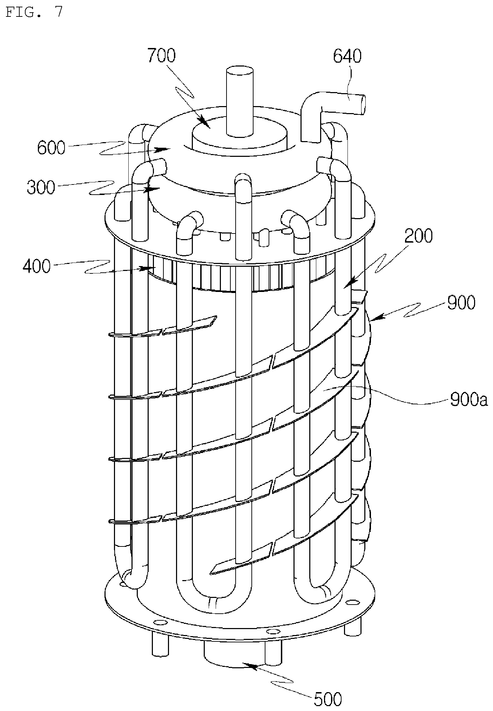

To address this issue, in another embodiment, the guide plate 900 may be composed of a plurality of sub-plates 900a divided for each U-shaped first catalyst tube 200 passing through, as shown in FIG. 7. That is, one of the sub-plates 900a are installed for each U-shaped first catalyst tube 200 to collectively form a spiral plate that enclose the entire first wall 120. In this case, it is preferable to minimize the distance between adjacent sub-plates 900a.

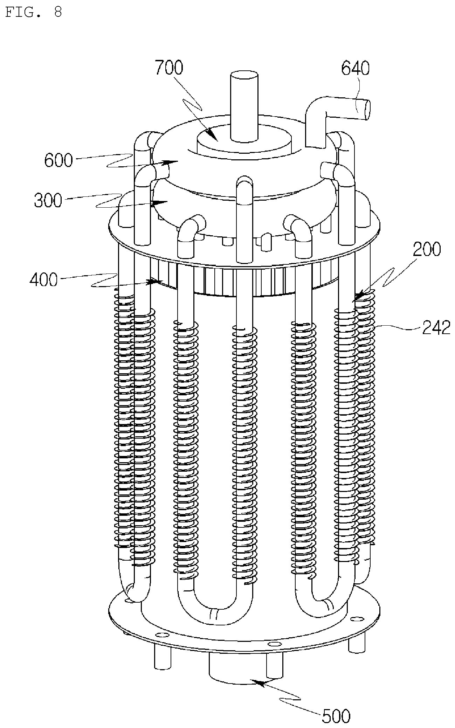

Next, a description is made of the combined reformer according to the third embodiment of the present disclosure with reference to FIG. 8.

The combined reformer of the third embodiment is identical to the combined reformer of the first embodiment, except for the addition of fins on the outer surface of the plurality of first catalyst tubes 200 in the longitudinal direction. In this embodiment, spiral fins 242 may be provided on the outer surface of the first catalyst tubes 200 along the longitudinal direction, especially, on the outer surface of the first and third sections of the first catalyst tubes 200.

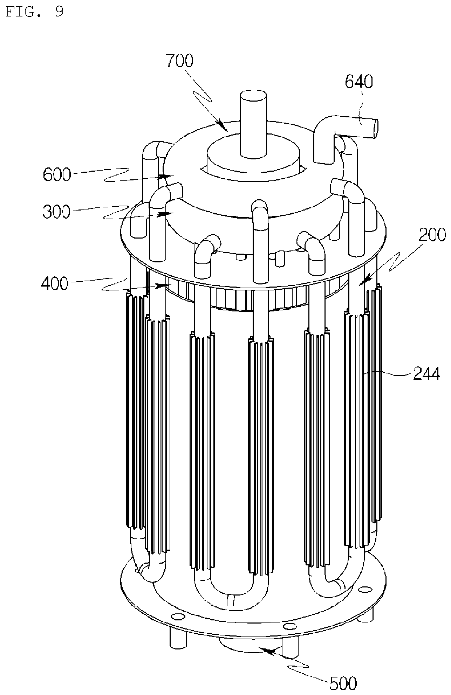

However, the configuration is not limited to thereto, and the shape of the fins may vary. For example, in another embodiment, a plurality of fins 244 may be aligned parallel to each other on the outer surface of the first catalyst tubes 200 in the longitudinal direction, each fin 244 being in an elongated shape in the longitudinal direction, as shown in FIG. 9.

As a result, the increased heat transfer surface area of the first catalyst tubes 200 facilitates heat exchange with the combustion gas, allowing for more efficient heat absorption and improved reforming efficiency.

According to the present disclosure, different reforming reactions can be continuously conducted by supplying heat from the combustion gas to two or more catalyst tubes, which react at different temperatures, in sequence. As an example, when pyrolysis gas and steam are supplied, hydrocarbons with carbon numbers of 2 or more may be reformed into methane by reacting with steam, and methane may be reformed into synthesis gas by reacting with steam. In this case, the structure and process can be simplified because a separate pre-reformer does not need to be installed. As another example, when biogas and steam are supplied, methane may be reformed into synthesis gas by reacting with steam (wet reforming) and methane may be reformed into synthesis gas by reacting with carbon dioxide (dry reforming) at the same time. In this case, a separate carbon dioxide removal device is not required because carbon dioxide does not need to be removed from biogas before the biogas is supplied to the reformer. According to an embodiment, the combined reactor is configured to adjust the combustion section 500 such that the temperature of the combustion gas at the bottom of the first catalyst tubes 200 between the first wall 120 and the main body 100 is within the first temperature range (T1) for the reaction of the first catalyst tubes 200 depending on the supply gas to the first catalyst tubes 200, the supply gas being either a combination of pyrolysis gas (containing hydrocarbons with carbon numbers of 2 or more) and steam or a combination of biogas (i.e., containing including hydrocarbon gas containing methane and carbon dioxide) and steam.

In addition, by including a first distributor in the combined reformer, the gas and steam discharged from a plurality of first catalyst tubes can be effectively distributed to multiple second catalyst tubes and may be evenly supplied to multiple second catalyst tubes. The first distributor helps maintain a balanced distribution of gases and steam, optimizing the performance of the overall process.

In addition, by including a second distributor, the hydrocarbon gas and steam supplied to multiple first catalyst tubes can be evenly distributed and supplied to multiple first catalyst tubes. The second distributor aids in achieving a balanced distribution of the hydrocarbon gas and steam, which helps optimize the performance and effectiveness of the first catalyst tubes throughout the process.

In addition, by forming the first catalyst tube in a U-shape, with a preheating section where the hydrocarbon gas flows parallel to the combustion gas and is preheated before reformation, and a catalyst reforming section where catalytic reforming takes place, it is possible to maximizes the heat absorption from the combustion gas, leading to improvement in reforming efficiency.

It should be understood that the advantages of the present disclosure are not limited to the aforesaid but include all advantages that can be inferred from the detailed description of the present disclosure or the configuration specified in the claims.

The present disclosure is not limited to the specific embodiments and descriptions provided above, and various modifications can be made within the scope of the claims by those skilled in the art without departing from the essence of the invention, with such modifications falling within the scope of protection of the present disclosure. Also, it is noted that any one feature of an embodiment of the present disclosure described in the specification may be applied to another embodiment of the present disclosure.

**DESCRIPTION OF REFERENCE NUMERALS**

| | | | |
|---|---|---|---|
| 100: | main body | 202: | preheating section |
| 120: | first wall | 204: | catalyst reforming section |
| 200: | first catalyst tube | 220: | U-turn section |
| 242, 244: | fin | 620: | second chamber |
| 300: | first distributor | 640: | supply port |
| 320: | first chamber | 700: | synthesis gas discharge section |
| 400: | second catalyst tube | 720: | third chamber |
| 420: | U-turn section | 740: | discharge pipe |
| 500: | combustion section | 900: | guide plate |
| 600: | second distributor | 900a: | sub-plate |

## Claims

1. A combined reformer comprising:
a main body;
a plurality of first catalyst tubes arranged inside the main body and configured to react at a first temperature;
a plurality of second catalyst tubes arranged inside the main body, fluidly connected to the plurality of first catalyst tubes, and configured to react at a second temperature higher than the first temperature;
a combustion section configured to supply heat to the plurality of first catalyst tubes and the plurality of second catalyst tubes; and
a first distributor connecting the plurality of first catalyst tubes and the plurality of second catalyst tubes and configured to distribute gas and steam discharged from the plurality of first catalyst tubes to the plurality of second catalyst tubes,
wherein the plurality of first catalyst tubes are formed in a U-shape and each U-shaped first catalyst tube is provided with a preheating section where pre-reforming hydrocarbon gas flows parallel to combustion gas and is heated and a catalyst reforming section where the catalytic reforming takes place.

2. The combined reformer of claim 1, wherein the preheating section is located in one of two straight sections of the U-shaped tube, and the catalyst reforming section is located in the other straight section of the U-shaped tube.

3. The combined reformer of claim 1 or 2, wherein the plurality of first catalyst tubes are configured such that the hydrocarbon gas flows in the same direction with a flow direction of the combustion gas in the preheating section and the hydrocarbon gas flows in the opposite direction to the flow direction of the combustion gas in the catalyst reforming section.

4. The combined reformer of any one of the preceding claims, wherein the first distributor comprises a first chamber connecting discharge ends of the plurality of first catalyst tubes and inlet ends of the plurality of second catalyst tubes.

5. The combined reformer of claim 4, further comprising a synthesis gas discharge section arranged on the inner side in the radial direction of the first distributer, accommodating connection of discharge ends of the plurality of second catalyst tubes to discharge synthesis gas.

6. The combined reformer of any one of the preceding claims, further comprising a second distributor distributing the hydrocarbon gas and steam supplied to the plurality of first catalyst tube, wherein the second distributor is arranged on the same side as the first distributor with respect to the main body.

7. The combined reformer of claim 6, wherein the second distributor comprises one or more supply ports supplying the hydrocarbon gas and steam and a second chamber connected to inlet ends of the plurality of first catalyst tubes.

8. The combined reformer of claim 6 or 7, wherein the synthesis gas discharge section extends through an inner side in the radial direction of the second distributor.

9. The combined reformer of any one of the preceding claims, wherein each U-shaped first catalyst tube extends along the longitudinal and circumferential directions of the main body, further comprising a spiral guide plate passing through the plurality of first catalyst tubes to guide the combustion gas.

10. The combined reformer of claim 9, wherein the plurality of first catalyst tubes are inserted through holes in the guide plate.

11. The combined reformer of claim 9 or 10, wherein the guide plate is composed of a plurality of sub-plates, divided at each section passing through each U-shaped first catalyst tube.

12. The combined reformer of any one of the preceding claims, wherein the plurality of first catalyst tubes comprises fins provided on the outer surface thereof in the longitudinal direction.

13. The combined reformer of any one of the preceding claims, wherein the hydrocarbon gas supplied to the plurality of first catalyst tubes comprises hydrocarbons with a carbon number of 2 or more, which is reformed into methane by reacting with the steam in the plurality of first catalyst tubes, the methane being reformed into synthesis gas including hydrogen and carbon monoxide by reacting with the steam in the plurality of second catalyst tubes.

14. The combined reformer of any one of the preceding claims, wherein the hydrocarbon gas supplied to the plurality of first catalyst tubes includes methane and carbon dioxide, the methane being reformed into synthesis gas including hydrogen and carbon monoxide by reacting with the steam in the plurality of first catalyst tubes and by reacting with the carbon dioxide in the plurality of second catalyst tubes.

15. A combined reformer comprising:
a main body;
a plurality of first catalyst tubes arranged inside the main body and configured to react at a first temperature;
a plurality of second catalyst tubes arranged inside the main body, connected to the plurality of first catalyst tubes, and configured to react at a second temperature higher than the first temperature;
a combustion section configured to supply heat to the plurality of first catalyst tubes and the plurality of second catalyst tubes;
a second distributor distributing hydrocarbon gas and steam supplied to the plurality of first catalyst tubes,
wherein the plurality of first catalyst tubes are formed in a U-shape and each U-shaped first catalyst tube is provided with a preheating section where pre-reforming hydrocarbon gas flows parallel to combustion gas and is heated and a catalyst reforming section where the catalytic reforming takes place.
